# EUROPEAN PATENT SPECIFICATION

(11) **EP 1 314 020 B1**
(45) Date of publication and mention of the grant of the patent: **19.09.2007**
(21) Application number: 01966316.0
(22) Date of filing: 28.08.2001
(51) Int. Cl.: G01N 21/85, G01N 21/25, B01F 15/00, B01F 9/04

(54) **METHOD AND APPARATUS FOR DETECTING ON-LINE HOMOGENEITY**
VERFAHREN UND VORRICHTUNG ZUM ON-LINE HOMOGENITÄTSNACHWEIS
PROCEDE ET APPAREIL PERMETTANT DE DETECTER L'HOMOGENEITE EN LIGNE

(30) Priority: 28.08.2000 US 228739 P
(43) Date of publication of application: 28.05.2003
(73) Proprietor: GLAXO GROUP LIMITED, Greenford, Middlesex UB6 ONN (GB)
(72) Inventor: WALKER, Dwight, Sherod, GlaxoSmithKline, Research Triangle Park, NC 27709 (US)
(74) Representative: Rice, Jason Neale
(86) International application number: PCT/US2001/026780
(87) International publication number: WO 2002/018912

(56) References cited:
- US-A- 4 704 035
- US-A- 4 820 045
- US-A- 5 946 088
- PATENT ABSTRACTS OF JAPAN vol. 1995, no. 03, 28 April 1995 (1995-04-28) -& JP 06 331542 A (MINAMIDE SYST ENG:KK), 2 December 1994 (1994-12-02)

## Description

### FIELD OF THE PRESENT INVENTION

The present invention relates generally to spectroscopy systems. More particularly, the invention relates to a method and apparatus for detecting on-line the homogeneity and constituent concentration of compositions of matter.

### BACKGROUND OF THE INVENTION

A critical step in the preparation of a pharmaceutical compositions, which often comprises five (5) or more constituents, including the active drug(s), is mixing or blending. Indeed, it is imperative that the pharmaceutical composition is homogenous to ensure that the appropriate dosage of the active drug(s) is delivered to a recipient.

The homogeneity and, of course, constituent concentration of pharmaceutical compositions are thus critical factors that are closely monitored during processing. Various conventional methods have been employed to determine the homogeneity and constituent concentration of pharmaceutical compositions. Most of the conventional methods are, however, complex and time consuming.

The conventional methods typically involve stopping the blender and removing nine (9) or more samples from various locations in the blender. The samples are then taken to a laboratory and analyzed. The blender remains shut down while the samples are analyzed, which can take from 24 to 48 hours to complete.

Another time consuming aspect of the traditional methods is the hit or miss approach to determine when the mixture is homogeneous. Typically, the blender is run for a predetermined amount of time. The blender is then stopped and the samples are removed and analyzed. If the mixture is not homogenous, the blender is run again and the testing procedure is repeated.

Further, the mixture may reach homogeneity at a time-point before the pre-determined set time for blending. In the first case more testing is carried out than is required, and in the second case valuable time is wasted in blending beyond the end-point It is also possible that over blending can cause segregation of the constituents (or components).

In U.S. Pat. No. 5,946,088 a further method of determining the homogeneity and drug concentration (i.e., potentency) of pharmaceutical compositions is disclosed. The method involves the use of a modified "V"-blender having spectroscopic detection means disposed proximate the axis of rotation. The "V'-blender is adapted to provide "on-line" spectroscopic characteristics as the "V"-blender is rotated.

Although the method disclosed in the '088 patent overcomes several of the above noted drawbacks associated with conventional methods of determining homogeneity and constituent concentration of pharmaceutical compositions, the method has several significant limitations. First, the method merely employs one (1) transflectance probe and is inherently limited to a maximum of two (2) probes. Second, the method is limited to a "V"-blender or the like.

It is therefore an object of the present invention to provide a method and apparatus for detecting on-line homogeneity and constituent concentration of pharmaceutical compositions that is readily adaptable to virtually all conventional blenders.

It is another object of the invention to provide a method and apparatus for detecting on-line homogeneity and constituent concentration of pharmaceutical compositions that employs a plurality of spectroscopic detection means at various positions on the blender.

It is yet another object of the invention to provide method and apparatus for detecting on-line homogeneity and constituent concentration of pharmaceutical compositions that includes control means to eliminate over mixing of the pharmaceutical composition.

JP-A-06 331 542 discloses a detection device for measuring the degree of mixing in a mixture of monochronic powders. The device employs a single detector whereby only the degree of mixing in one region of the mixture is detectable.

US-A-4 820 045 discloses a system to determine the content of a certain number of substances within a solution by remote spectrophotometric analysis.

Further background art is disclosed in US-A-5 946 088 and US-A-4 704 035.

### SUMMARY OF THE INVENTION

In accordance with the present invention there is provided an apparatus according to claim 1 and a method according to claim 15. Preferred features are set forth in the other claims.

### BRIEF DESCRIPTION OF THE DRAWINGS

Further features and advantages will become apparent from the following and more particular description of the preferred embodiments of the invention, as illustrated in the accompanying drawings, and in which like referenced characters generally refer to the same parts or elements throughout the views, and in which:
FIGURE 1 is a perspective view of a prior art tote blending system;
FIGURE 2 is a partial section perspective view of a prior art mixing tote;
FIGURE 3 is a perspective schematic illustration of the prior art mixing tote shown in FIGURE 2;
FIGURES 4-6 are partial section perspective views of the mixing tote shown in FIGURE 2, illustrating the detection means according to the invention;
FIGURE 7 is a perspective view of a first embodiment of the invention;
FIGURE 8 is a perspective view of the second control means according to the invention;
FIGURE 9 is a partial section perspective view of the drive axle assembly according to the invention;
FIGURE 10 is a further perspective view of the first embodiment of the invention shown in FIGURE 7, illustrating the system enclosure according to the invention;
FIGURE 11 is a partial section perspective view of the mixing tote shown in FIGURE 2, illustrating remote detection means; and
FIGURE 12 is a perspective view of an apparatus, incorporating the remote detection means shown in FIGURE 11.

### DETAILED DESCRIPTION OF THE PREFERRED EMBODIMENT

The present invention substantially reduces or eliminates the disadvantages and drawbacks associated with prior art methods of determining homogeneity and constituent concentration of compositions of matter. As discussed in detail below, the invention provides a novel means for "on-line" determination of homogeneity and constituent concentration of compositions of matter and, in particular, pharmaceutical compositions at a plurality of positions in a mixing container or tote. The noted data may further be provided in a random manner or over a pre-determined time sequence.

Different types of blenders or blending systems are currently used in the art for blending or mixing pharmaceutical compositions, such as a V-blender, core blender and ribbon blender. Illustrative is the blenders disclosed in U.S. Pat. Nos. 5,946,088 and 590,441, which are incorporated by reference herein.

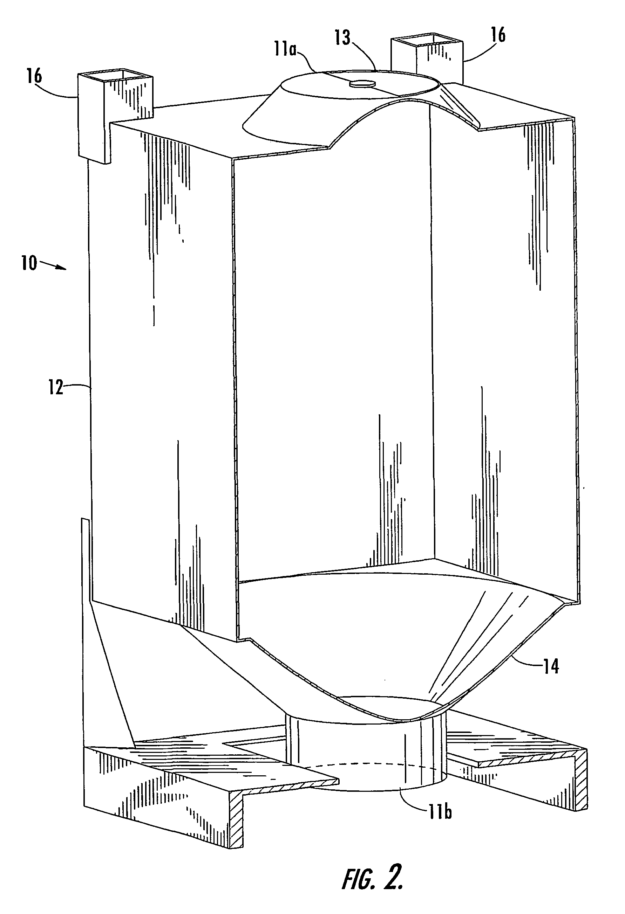

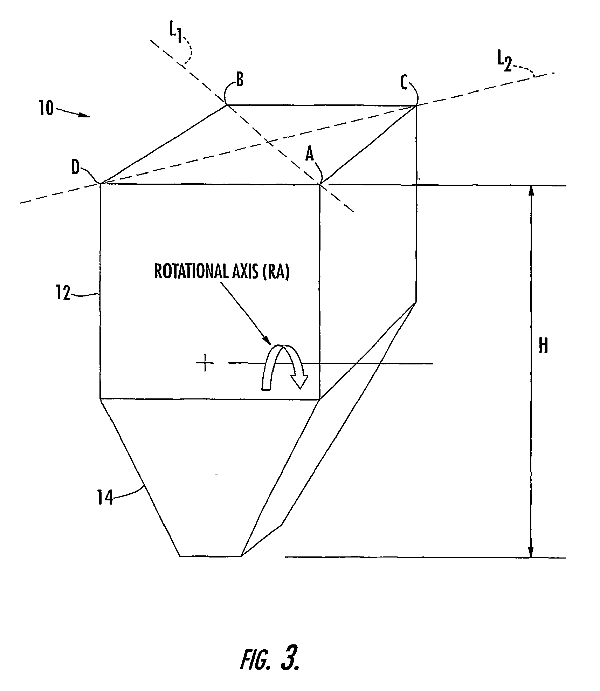

A further blending system is the "tote blending" system distributed by Matcon USA, Inc., Sewall, New Jersey, which is incorporated by reference herein. As discussed in detail below, the blending system 5 mixes compositions of matter, such as powders or liquids, by rotating a "blending tote" 10 containing the composition of matter about an axis of rotation. The tote 10, illustrated in Figs. 2 and 3, typically has a height (H) in the range of 55" in. to 65" in. and is adapted to hold approximately 1586 liters of matter.

Referring to Fig. 2, the blending tote 10 includes a substantially rectangular section 12 and a substantially tapered section 14 disposed on the bottom end thereof. The tote 10 also includes a first opening 11a at the top of the tote 10 that is generally employed to charge the tote 10 with the individual compositions of matter that are to be mixed (or blended) and a second opening 11b at the bottom of the tote 10 that is generally employed to discharge the mixed, homogeneous composition. Openings 11 a, 11 b are covered and sealed during the mixing process by conventional butterfly 13 or cone valves.

The tote 10 further includes a plurality of corner posts 16 adapted to removeably engage the mixer clamping frame 18. As illustrated in Fig. 2, a respective post 16 is disposed at each top corner of the tote rectangular section 12.

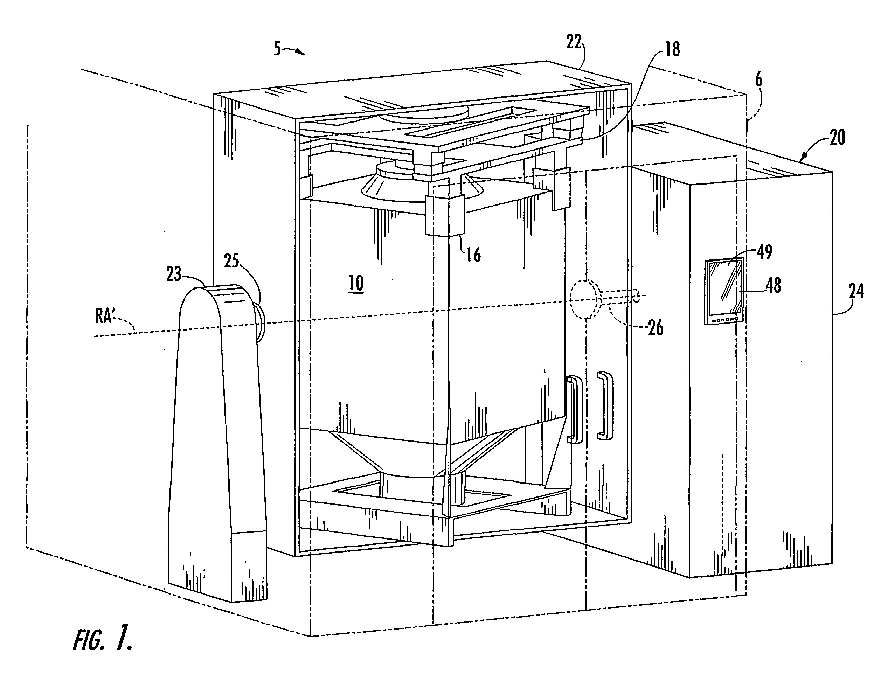

Referring to Figs. 1 and 3, the tote 10 is positioned in the mixer cage 22 such that the line that intersects points (or corners) A and B, designated L₁, or the line that intersects points C and D, designated L₂, is substantially coincident the rotational axis, RA, of the tote 10. As will be appreciated by one having ordinary skill in the art, the noted position of the tote 10 during rotation provides optimal blending of the matter contained therein. Thus, the tote blending system illustrated in Fig. 1 is the preferred blending means of the invention. However, as will also be appreciated by one having ordinary skill in the art, the method and apparatus of the invention, discussed in detail below, is also readily adaptable to the conventional blenders identified above.

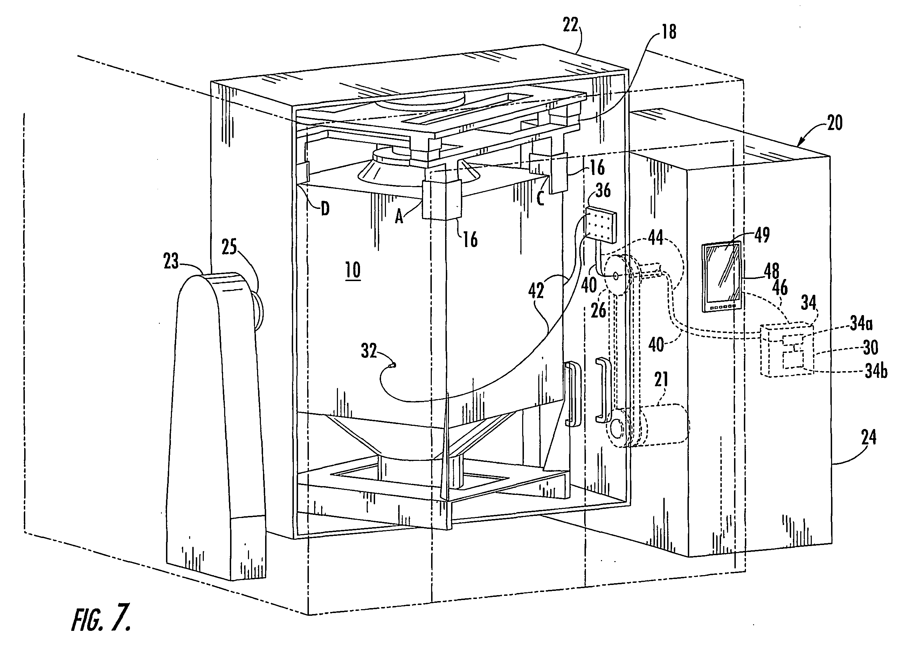

Referring back to Fig. 1, the tote 10 is secured in the cage 22 of the mixer 20 via the engagement of the linearly moveable clamping frame 18 and the tote corner posts 16. As illustrated in Fig. 1, the cage 22 is rotatably connected to the mixer support housing 23 via a conventional axle assembly 25 and the control housing 24 via a conventional "drive" axle assembly 26. The cage 22 and, hence, tote 10 is rotated about axis RA via conventional drive means 21 that is operatively connected to the drive axle assembly 26 (See Fig. 7).

As will be appreciated by one having ordinary skill in the art, various conventional "rotation means", such as the noted axle assemblies 25, 26, may be employed within the scope of the invention to facilitate rotatable connection of the cage 22 to the housings 23,24. The conventional rotation means may also be employed with the additional mixing means identified above.

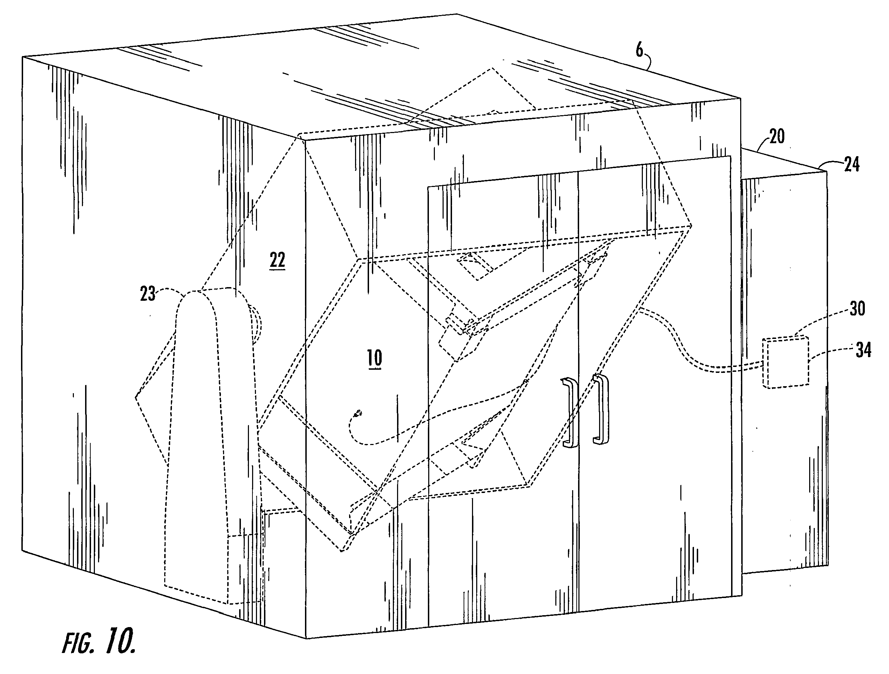

As further illustrated in Fig. 1, the blending system 5 typically comprises an open, stand-alone system. However, as illustrated in Fig. 10, the blending system 5 may include an enclosure 6 to meet stringent safety and quality control requirements.

As indicated above, a key feature of the present invention is the spectroscopic means. In a preferred embodiment of the invention, the spectroscopic means includes a plurality of spectroscopic detection means to determine the homogeneity and constituent concentration of the pharmaceutical composition during the mixing operation (i.e., on-line). By the term "spectroscopic detection means", as used herein, it is meant to mean and include a reflectance probe, transflectance probe, near-infrared spectrophotometer, ultraviolet spectrophotometer, mid-range infrared spectrophotometer, visible spectrophotometer, fluorescence spectrophotometer and Raman spectrophotometer.

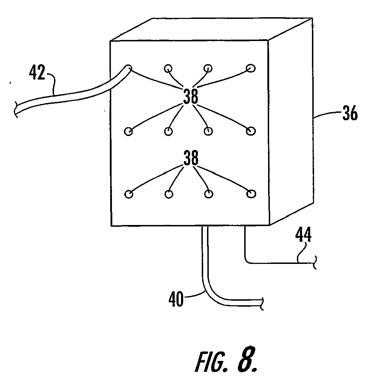

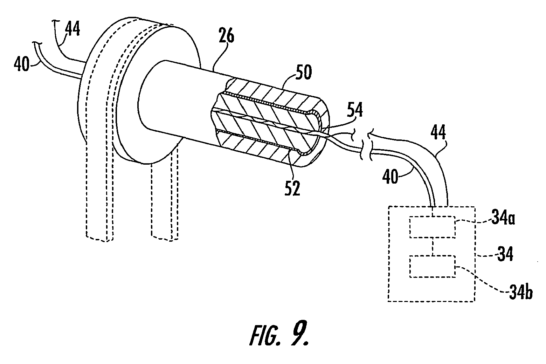

Referring now to Fig. 7, according to the invention, the spectroscopic means 30 of the invention further includes (i) first control means 34 having light source means 34a for providing the desired wavelength of light (or radiation) to the spectroscopic detection means 32 and analyzer means 34b for analyzing the emission light detected by the spectroscopic detection means 32, and (ii) second control means 36 having a plurality of optic lead inputs 38 and switch means adapted to selectively facilitate communication by and between the primary optic lead 40 and a.selective one of the optic lead inputs 38 (See Figs. 8 and 9). Carl Zeiss, which are incorporated by reference herein. The analyzer means 34b may also comprise a personal computer.

As illustrated in Figs. 7-9, the spectroscopic means 30 further includes (i) at least one detection means lead 42, having conduction means for conducting light, (ii) a first control lead 46 that is operatively connected to the control panel 48 and the first control means 34, and (iii) a second control lead 44 that is operatively connected to the first and second control means 34, 36 to facilitate transmission of at least a first control signal from the second control means 36 to the first control means 34 indicative of the location of a respective one of the spectroscopic detection means 32 that is in communication with the first control means 34 (via the second control means switch means), a second control signal from the first control means 34 to the second control means 36 to control the conduction of the light from the light source means 34a to a respective one of the spectroscopic detection means 32, and a third control signal for controlling the conduction of emission light from a respective one of the spectroscopic detection means 32 to the analyzer means 34b.

According to the invention, the first control means 34 is preferably disposed in the control housing 24. The second control means 36 is preferably mounted to the mixer cage 22 (See Fig. 7).

Referring now to Fig. 9, to facilitate communication by and between the first and second control means 34, 36, the drive axle assembly 26 (i.e., rotation means) includes a first (or outer) member 50 adapted to rotate with the cage 22 and, hence, mixing tote 10 and a second (or inner) member 52 adapted to remain relatively fixed in relation to the first member 50 during rotation of the cage 22. In a preferred embodiment of the invention, the second member 52 comprises a rotatable sleeve assembly.

As illustrated in Fig. 9, the sleeve assembly 52 includes a substantially lateral communication port 54 adapted to receive the primary optic lead 40 and second control lead 44. Thus, during rotation of the first member 50, the sleeve assembly 52 remains relatively fixed to eliminate "kinking" of the leads 40, 44.

As will be appreciated by one having ordinary skill in the art, various conventional rotation means having at least two rotatable members may be employed within the scope of the invention to facilitate rotation of one member in communication with the cage 22 (or other mixer/blender) relative to a second member that receives the leads 40,44 and remains relatively fixed during rotation of the first member. Such rotation means includes a conventional bearing assembly and bushing assembly.

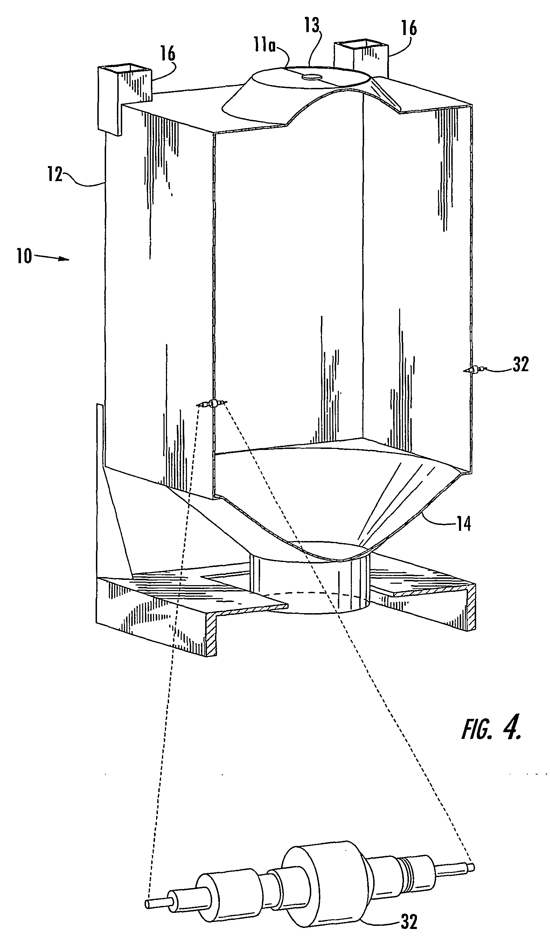

Referring now to Fig. 4, there is shown one embodiment of the invention wherein two (2) spectroscopic detection means 32 are employed. The spectroscopic detection means 32 are preferably disposed proximate the bottom of the mixing tote 10.

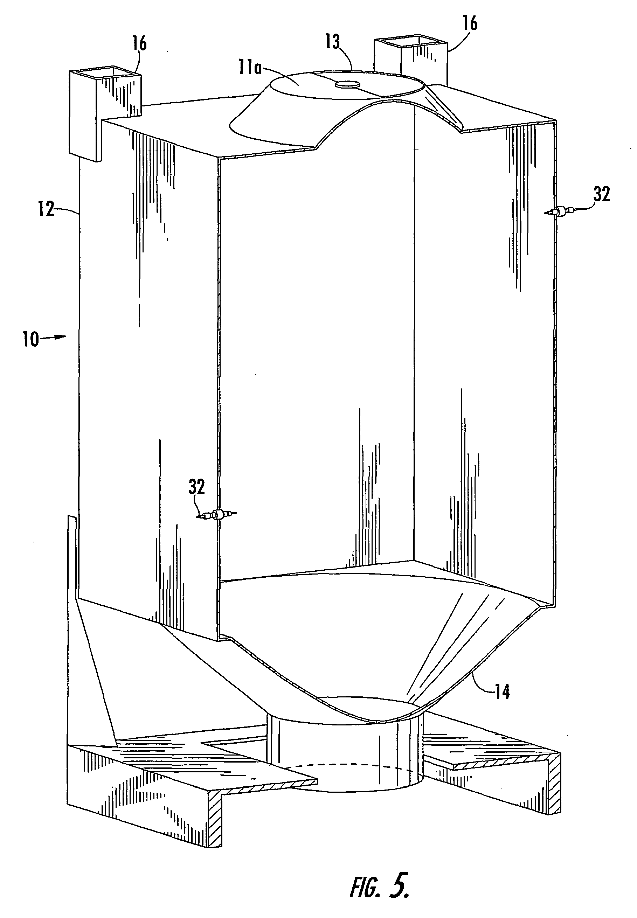

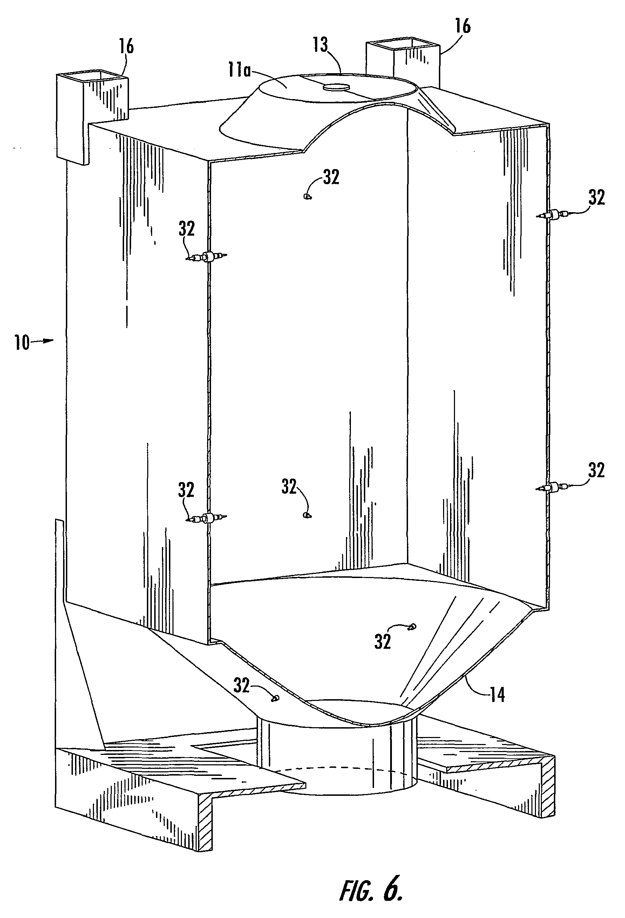

However, as indicated, a plurality of spectroscopic detection means 32 disposed at various positions, such as that illustrated in Figs. 5 and 6, may be employed within the scope of the invention. In a preferred embodiment, at least ten (10) spectroscopic detection means 30 are employed (See, e.g., Fig. 6).

As illustrated in Fig. 7, each of the spectroscopic detection means 32 shown in Fig. 4 is operatively connected to the second control means 36 via detection means leads 42. As indicated above, each lead 42 includes conduction means, such as a light pipe, optics and fiber optic bundle. In a preferred embodiment of the invention, the conduction means comprises a fiber optic bundle having two sets of optical fibers; a first set of optical fibers to convey light from the first control means 34 (i.e., light source means 34a) to the spectroscopic detection means 32 and, hence, mixture inside the mixing tote 10 and a second set of optical fibers to convey the detected (i.e., emission) light back to the first control means 34 (i.e., analyzer means 34b).

As indicated above, various spectroscopic detection means 32 may be employed within the scope of the invention. In a preferred embodiment, the spectroscopic detection means 32 comprises a reflectance probe. A typical reflectance probe is disclosed in U.S. Pat. No. 5,044,755, which is incorporated by reference herein.

In the noted reflectance probe, a lens collimates the light emerging from the fiber optic bundle. The optic ray is then guided through a sample cell and reflected back to the same lens that focuses the light into the same fiber optic bundle.

According to the invention, the mixing and detection process of the invention comprises the following: The mixing tote 10 charged with the pharmaceutical composition is initially loaded into the mixer 20 and secured therein by the clamping frame 18. The detection means leads 42 are then connected to each detection means 32 (i.e., reflectance probe) and a respective optic lead input 38 of the second control means 36.

The location of each detection means lead 42 on the second control means 36 (i.e., optic lead input 38), the corresponding location of a respective one of the spectroscopic detection means 32, and the desired spectroscopic scanning sequence are entered into the system 5 via the control panel 48. Further information, such as mix time and/or sequence, and desired homogeneity and concentration levels, may also be inputted into the system 5 via the control panel 48. The noted information is then communicated to the first control means 34 via first control lead 46.

The mixing tote 10 is then rotated by the mixer 20 (See Fig. 10) and the desired spectroscopic data (e.g., absorption spectrum) is acquired by the spectroscopic means 30 pursuant to the inputted spectroscopic scanning sequence. As discussed above, the spectroscopic data is then communicated to the analyzer means 34b where the homogeneity and constituent concentration of the pharmaceutical composition is determined by conventional means.

According to the invention, the tote 10 is rotated for either a pre-determined period of time or until the pharmaceutical composition contained in the tote 10 reaches a desired level of homogeneity. The desired homogeneity level may be either the average of the spectroscopic data detected by all detection means 32 or the minimum value detected by each detection means 32.

As illustrated in Fig. 7, the control panel 48 further includes display means 49 adapted to visually display a variety of parameters, including the homogeneity and/or constituent concentration of the pharmaceutical composition proximate each spectroscopic detection means 32 during virtually any point in the mixing process. The display means 49 are further adapted to visually display other pertinent information, such as the heat or batch number, operator identification, etc..

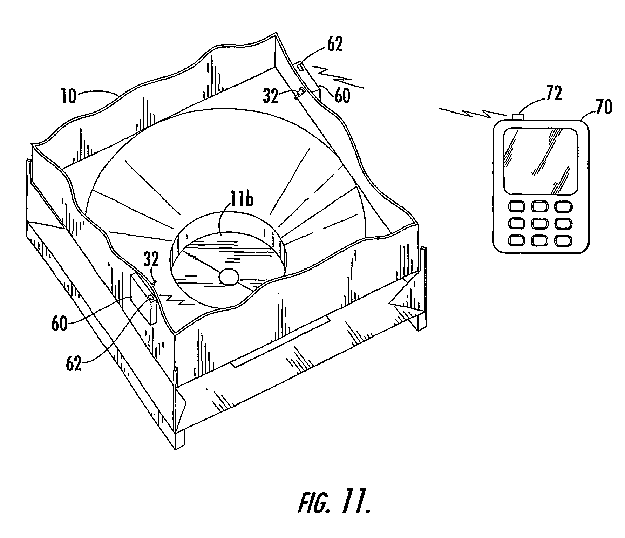

Referring now to Fig. 11, there is shown an additional apparatus. In the noted, apparatus, a plurality of spectroscopic detection means 32 are similarly employed. However, as illustrated in Fig. 11, each spectroscopic detection means 32 includes intergral control means 60. According to the apparatus, the control means 60 similarly includes light source means for providing the desired wavelength of light to the detection means 32 and analyzer means for analyzing the emission light detected by the spectroscopic detection means 32.

The control means 60 further includes means for remotely transmitting at least a first detection signal indicative of the spectroscopic characteristics of the pharmaceutical composition contained in the tote 10 and receiving at least a first control signal from the control panel 70. According to the apparatus, the means for transmitting and receiving the first detection signal and first control signal can comprise a radio frequency (RF) transmitter/receiver, an infrared transmitter/receiver and a low power microwave transmitter/receiver. In an apparatus, the means for transmitting and receiving the noted signals comprises a RF transmitter/receiver 62.

According to the apparatus, the control panel 70 also includes a RF transmitter/receiver 72. The RF transmitter/receiver 72 is adapted to receive the first detection signal from each respective control means 62 and transmit the first control signal to each of the control means 62.

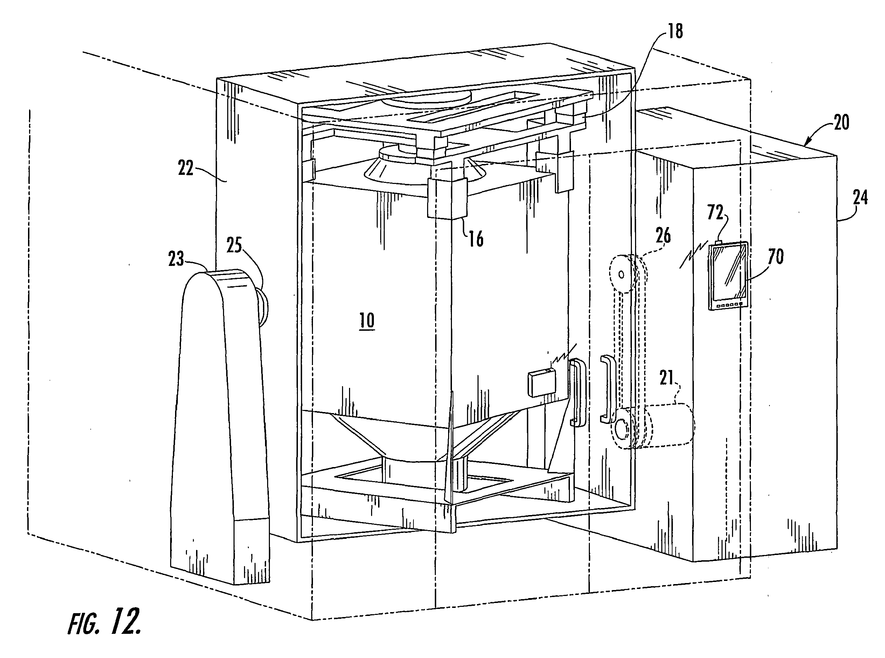

Referring now to Fig. 12, the control panel 70 is preferably mounted to the mixing housing 24. The control panel 70 also includes display means 74 that is capable of visually displaying the same information discussed above.

Operation of the spectroscopic system illustrated in Figs. 11 and 12 is also quite similar to the operation of the above-discussed embodiment. However, in this instance, the spectroscopic characteristics are directly communicated to the display means 74 via RF signals. The second control means 36 and leads 40, 42, 44 discussed above are thus eliminated.

### SUMMARY

From the foregoing description, one of ordinary skill in the art can easily ascertain that the present invention provides novel means for accurate, cost efficient, on-line detection of homogeneity and concentration of pharmaceutical compositions that is readily adaptable to virtually all conventional blenders and blending systems.

## Claims

1. An apparatus for mixing compositions of matter and detecting on-line the homogeneity and constituent concentration of said compositions of matter, comprising:
mixing means (20) for mixing said compositions of matter, said mixing means including a container (10) defined by a wall, said wall defining plural detection locations which are spatially separated from each other and located in distinct regions of said container, and
spectroscopic means (30) for detecting on-line the homogeneity and constituent concentration of said compositions of matter, said spectroscopic means including
a plurality of spectroscopic detection means (32) disposed on said mixing means for providing light to said compositions of matter and detecting emission light from said compositions of matter, each of said plurality of spectroscopic detection means being positioned at a different detection location from the other spectroscopic detection means,
first control means (34) for providing said light to said plurality of spectroscopic detection means and analyzing said emission light from said plurality of spectroscopic detection means, said first control means including light source means (34a) for providing a predetermined wavelength of said light to said plurality of spectroscopic detection means and analyzer means (34b) for analyzing said emission light detected by said plurality of spectroscopic detection means, and
second control means (36) in communication with said first control means and said plurality of spectroscopic detection means for controlling the transmission of said light from said light source means to said plurality of spectroscopic detection means and said emission light from said plurality of spectroscopic detection means to said analyzer means, said second control means including switch means for connecting a respective one of said plurality of spectroscopic detection means to said first control means.

2. The apparatus of Claim 1, wherein said spectroscopic means includes first conduction means (40) for conducting said light from said light source means to said second control means and conducting said emission light from said second control means to said analyzer means and at least one second conduction means (42) for conducting light from said second control means to a respective one of said plurality of spectroscopic detection means and conducting said emission light from said respective one of said plurality of spectroscopic detection means to said second control means.

3. The apparatus of Claim 1 for detecting on-line the spectroscopic characteristics of said compositions of matter, wherein said mixing means is adapted to rotate about an axis of rotation (RA), said mixing means including first and second rotation means disposed proximate said axis of rotation to facilitate rotation of said mixing means, said first rotation means being in communication with a first support and said second rotation means being in communication with a second support, at least one of said first and second rotation means including a first member (50) adapted to rotate with said mixing means and a second member (52) adapted to remain relatively fixed in relation to said first member during said rotation of said first member, said second member having a communication port (54) therethrough; wherein said second control means further includes first, conduction means (40) for conducting said light from said light source means to said second control means and conducting said emission light from said second control means to said analyzer means and a plurality of second conduction means (42) for conducting said light from said second control means to said plurality of spectroscopic detection means and conducting said emission light from said plurality of spectroscopic detection means to said second control means, said first conduction means being removeably disposed in said communication port.

4. The apparatus of Claim 3, wherein each of said plurality of second conduction means has a first end adapted to be removeably connected to a respective one of said plurality of spectroscopic detection means and a second end adapted to be removeably connected to said second control means.

5. The apparatus of Claim 4, wherein said second control means includes a plurality of second conduction means inputs (38), each of said plurality of second conduction means inputs being adapted to receive said second end of a respective one of said second conduction means.

6. The apparatus of Claim 5, wherein said first control means further includes: (a) means for determining the location of each of said plurality of spectroscopic detection means on said container wall; (b) means for controlling the conduction of said light from said light source means to a respective one of said plurality of spectroscopic detection means; and (c) means for selecting a respective one of said plurality of spectroscopic detection means for conducting said emission light from said one of said plurality of spectroscopic detection means to said analyzer means.

7. The apparatus of Claim 6, wherein said spectroscopic means includes a control lead (44) in communication with said first and second control means adapted to transmit at least a first signal from said second control means to said first control means indicative of the location of a respective one of said plurality of spectroscopic detection means that is in communication with said first control means during rotation of said container.

8. The apparatus of Claim 7, wherein said control lead is removeably disposed in said communication port.

9. The apparatus of Claim 1 or 3 , wherein said mixing means comprises a mixing tote (10).

10. The apparatus of Claim 1 or 3, wherein said mixing means comprises a blender selected from the group consisting of a V-blender, core blender and ribbon blender.

11. The apparatus of Claim 1 or 3, wherein each of said plurality of spectroscopic detection means comprises a reflectance probe.

12. The apparatus of Claim 1 or 3, wherein each of said plurality of spectroscopic detection means comprises a transflectance probe.

13. The apparatus of Claim 1 or 3, wherein each of said plurality of spectroscopic detection means comprises a spectrophotometer selected from the group consisting of a near infrared spectrophotometer, an ultraviolet spectrophotometer, a midrange infrared spectrophotometer, a visible spectrophotometer, a fluorescent spectrophotometer and a Raman spectrophotometer.

14. The apparatus of Claim 1, wherein said plurality of spectroscopic detection means comprises at least ten spectroscopic detection means.

15. A method for mixing compositions of matter and detecting on-line the homogeneity and constituent concentration of said compositions of matter by detecting on-line the spectroscopic characteristics of said compositions of matter, comprising the steps of : placing said compositions of matter into mixing means (20) which includes a container (10) defined by a wall which defines plural detection locations which are spatially separated from each other and located in distinct regions of said container, mixing said compositions of matter; detecting on-line the homogeneity and constituent concentration of said compositions of matter by detecting on-line the spectroscopic characteristics of said compositions of matter with spectroscopic means (30), said spectroscopic means including
a plurality of spectroscopic detection means (32), each disposed on said mixing means at a different detection location from the other spectroscopic detection means, for providing light to said compositions of matter and detecting emission light from said compositions of matter,
first control means (34) for providing said light to said plurality of spectroscopic detection means and analyzing said emission light from said plurality of spectroscopic detection means, and
second control means (36) in communication with said first control means and said plurality of spectroscopic detection means for controlling the transmission of said light from said first control means to said plurality of spectroscopic detection means and said emission light from said plurality of spectroscopic detection means to said first control means, said second control means including switch means for connecting a respective one of said plurality of spectroscopic detection means to said first control means.

## Patentansprüche

1. Vorrichtung zum Mischen von Stoffzusammensetzungen und Online-Nachweis der Homogenität und Bestandteilkonzentration der Stoffzusammensetzungen, mit:
einer Mischeinrichtung (20) zum Mischen der Stoffzusammensetzungen, wobei die Mischeinrichtung einen Behälter (10) umfasst, der durch eine Wand definiert ist, wobei die Wand mehrere Nachweisstellen definiert, die räumlich voneinander getrennt sind und sich in einzelnen Bereichen des Behälters befinden; und
einer Spektroskopie-Einrichtung (30) zum Online-Nachweis der Homogenität und Bestandteilkonzentration der Stoffzusammensetzungen, wobei die Spektroskopie-Einrichtung umfasst:
eine Vielzahl von spektroskopischen Nachweiseinrichtungen (32), die an der Mischeinrichtung angeordnet sind, um Licht an die Stoffzusammensetzungen vorzusehen und Emissionslicht von den Stoffzusammensetzungen zu erfassen, wobei jede der Vielzahl von spektroskopischen Nachweiseinrichtungen an einer unterschiedlichen Nachweisstelle von der anderen spektroskopischen Nachweiseinrichtung positioniert ist,
eine erste Steuereinrichtung (34), um Licht an die Vielzahl von spektroskopischen Nachweiseinrichtungen vorzusehen und das Emissionslicht von der Vielzahl von spektroskopischen Nachweiseinrichtungen zu analysieren, wobei die erste Steuereinrichtung eine Lichtquelleneinrichtung (34a) umfasst, zum Vorsehen einer vorbestimmten Wellenlänge des Lichts an die Vielzahl von spektroskopischen Nachweiseinrichtungen, und eine Analyseeinrichtung (34b), zum Analysieren des Emissionslichts, das durch die Vielzahl von spektroskopischen Nachweiseinrichtungen erfasst wurde, und
eine zweite Steuereinrichtung (36) in Verbindung mit der ersten Steuereinrichtung und der Vielzahl von spektroskopischen Nachweiseinrichtungen, zum Steuern der Übertragung des Lichts von der Lichtquelleneinrichtung an die Vielzahl von spektroskopischen Nachweiseinrichtungen und des Emissionslichts von der Vielzahl von spektroskopischen Nachweiseinrichtungen an die Analyseeinrichtung, wobei die zweite Steuereinrichtung eine Schalteinrichtung umfasst, zur Verbindung einer jeweiligen der Vielzahl von spektroskopischen Nachweiseinrichtungen mit der ersten Steuereinrichtung.

2. Vorrichtung nach Anspruch 1, bei der die Spektroskopie-Einrichtung eine erste Leitungseinrichtung (40) umfasst, zum Leiten des Lichts von der Lichtquelleneinrichtung an die zweite Steuereinrichtung und Leiten des Emissionslichts von der zweiten Steuereinrichtung an die Analysatoreinrichtung, und zumindest eine zweite Leitungseinrichtung (42), zum Leiten des Lichts von der zweiten Steuereinrichtung an eine jeweilige der Vielzahl von spektroskopischen Nachweiseinrichtungen und Leiten des Emissionslichts von der jeweiligen der Vielzahl von spektroskopischen Nachweiseinrichtungen an die zweite Steuereinrichtung.

3. Vorrichtung nach Anspruch 1 zum Online-Nachweis der spektroskopischen Charakteristika der Stoffzusammensetzungen, wobei die Mischeinrichtung geeignet ist, um eine Rotationsachse (RA) zu rotieren, wobei die Mischeinrichtung erste und zweite Rotationseinrichtungen umfasst, die nahe der Rotationsachse angeordnet sind, um eine Rotation der Mischeinrichtung zu ermöglichen, wobei die erste Rotationseinrichtung in Verbindung mit einer ersten Stütze ist und die zweite Rotationeinrichtung in Verbindung mit einer zweiten Stütze ist, wobei zumindest eine der ersten und zweiten Rotationseinrichtungen ein erstes Element (50) umfasst, das geeignet ist, mit der Mischeinrichtung zu rotieren, und ein zweites Element (52), das geeignet ist, in Bezug auf das erste Element während der Rotation des ersten Elements relativ ortsfest zu bleiben, wobei das zweite Element eine Verbindungsöffnung (54) durch es hindurch aufweist; wobei die zweite Steuereinrichtung ferner eine erste Leitungseinrichtung (40) umfasst, zum Leiten des Lichts von der Lichtquelleneinrichtung an die zweite Steuereinrichtung und Leiten des Emissionslichts von der zweiten Steuereinrichtung an die Analysatoreinrichtung, und eine Vielzahl von zweiten Leitungseinrichtungen (42), zum Leiten des Lichts von der zweiten Steuereinrichtung an die Vielzahl von spektroskopischen Nachweiseinrichtungen und Leiten des Emissionslichts von der vielzahl von spektroskopischen Nachweiseinrichtungen an die zweite Steuereinrichtung, wobei die erste Leitungseinrichtung abnehmbar in der Verbindungsöffnung angeordnet ist.

4. Vorrichtung nach Anspruch 3, bei der jede der Vielzahl von zweiten Leitungseinrichtungen ein erstes Ende aufweist, das geeignet ist, abnehmbar mit einer jeweiligen der Vielzahl von spektroskopischen Nachweiseinrichtungen verbunden zu werden, und ein zweites Ende, das geeignet ist, mit der zweiten Steuereinrichtung abnehmbar verbunden zu werden.

5. Vorrichtung nach Anspruch 4, bei der die zweite Steuereinrichtung eine Vielzahl von zweiten Leitungseinrichtungseingängen (38) umfasst, wobei jede der Vielzahl von zweiten Leitungseinrichtungseingängen geeignet ist, das zweite Ende von einem jeweiligen der zweiten Leitungseinrichtung zu empfangen.

6. Vorrichtung nach Anspruch 5, bei der die erste Steuereinrichtung ferner umfasst: (a) eine Einrichtung zur Bestimmung der Stelle von jeder der vielzahl von spektroskopischen Nachweiseinrichtungen an der Behälterwand; (b) eine Einrichtung zum Steuern des Leitens des Lichts von der Lichtquelle an eine jeweilige der Vielzahl von spektroskopischen Nachweiseinrichtungen; und (c) eine Einrichtung zum Auswählen einer jeweiligen der Vielzahl von spektroskopischen Nachweiseinrichtungen, zum Leiten des Emissionslichts von der einen der Vielzahl von spektroskopischen Nachweiseinrichtungen an die Analyseeinrichtung.

7. Vorrichtung nach Anspruch 6, bei der die spektroskopische Einrichtung eine Steuerleitung (44) umfasst, die mit der ersten und der zweiten Steuereinrichtung in Verbindung ist, wobei sie geeignet ist, zumindest ein erstes Signal von der zweiten Steuereinrichtung an die erste Steuereinrichtung zu übertragen, auf die Stelle von einer jeweiligen der Vielzahl von spektroskopischen Nachweiseinrichtungen hindeutend, die mit der ersten Steuereinrichtung in Verbindung ist, während einer Rotation des Behälters.

8. Vorrichtung nach Anspruch 7, bei der die Steuerleitung in der Verbindungsöffnung abnehmbar angeordnet ist.

9. Vorrichtung nach Anspruch 1 oder 3, bei der die Mischeinrichtung ein Mischteil (10) umfasst.

10. Vorrichtung nach Anspruch 1 oder 3, bei der die Mischeinrichtung einen Mischer umfasst, der aus der Gruppe ausgewählt ist, die aus einem V-Mischer, Kernmischer und Bandmischer besteht.

11. Vorrichtung nach Anspruch 1 oder 3, bei der jede der Vielzahl von spektroskopischen Nachweiseinrichtungen einen Reflexionssensor umfasst.

12. Vorrichtung nach Anspruch 1 oder 3, bei der jede der Vielzahl von spektroskopischen Nachweiseinrichtungen einen Transflexionssensor umfasst.

13. Vorrichtung nach Anspruch 1 oder 3, bei der jede der Vielzahl von spektroskopischen Nachweiseinrichtungen einen Spektrophotometer umfasst, der aus der Gruppe ausgewählt ist, die aus einem Nah-Infrarot-Spektrophotometer, einem Ultraviolett-Spektrophotometer, einem Spektrophotometer des mittleren Infrarotbereichs, einem Sicht-Spektrophotometer, einem Fluoreszenz-Spektrophotometer und einem Raman-Spektrophotometer besteht.

14. Vorrichtung nach Anspruch 1, bei der die Vielzahl von spektroskopischen Nachweiseinrichtungen zumindest zehn spektroskopische Nachweiseinrichtungen umfasst.

15. Verfahren zum Mischen von Stoffzusammensetzungen und Online-Nachweis der Homogenität und Bestandteilkonzentration der Stoffzusammensetzungen durch Online-Nachweisen der spektroskopischen Charakteristika der Stoffzusammensetzungen, die folgenden Schritte umfassend: Platzieren der Stoffzusammensetzungen in eine Mischeinrichtung (20), die einen Behälter (10) umfasst, der durch eine Wand definiert ist, welche mehrere Nachweisstellen definiert, die räumlich voneinander getrennt sind und sich in einzelnen Bereichen des Behälters befinden; Mischen der Stoffzusammensetzungen; online-Nachweisen der Homogenität und Bestandteilkonzentration der Stoffzusammensetzungen durch Online-Nachweisen der spektroskopischen Charakteristika der Stoffzusammensetzungen mit einer Spektroskopie-Einrichtung (30), wobei die Spektroskopie-Einrichtung umfasst:
eine Vielzahl von spektroskopischen Nachweiseinrichtungen (32), wobei jede an der Mischeinrichtung an einer unterschiedlichen Nachweisstelle von der anderen spektroskopischen Nachweiseinrichtung angeordnet ist, um Licht an die Stoffzusammensetzungen vorzusehen und Emissionslicht von den Stoffzusammensetzungen zu erfassen,
eine erste Steuereinrichtung (34), um Licht an die Vielzahl von spektroskopischen Nachweiseinrichtungen vorzusehen und das Emissionslicht von der Vielzahl von spektroskopischen Nachweiseinrichtungen zu analysieren, und
eine zweite Steuereinrichtung (36) in Verbindung mit der ersten Steuereinrichtung und der Vielzahl von spektroskopischen Nachweiseinrichtungen, zum Steuern der Übertragung des Lichts von der ersten Steuereinrichtung an die vielzahl von spektroskopischen Nachweiseinrichtungen und des Emissionslichts von der Vielzahl von spektroskopischen Nachweiseinrichtungen an die erste Steuereinrichtung, wobei die zweite Steuereinrichtung eine Schalteinrichtung umfasst, zur Verbindung einer jeweiligen der Vielzahl von spektroskopischen Nachweiseinrichtungen mit der ersten Steuereinrichtung.

## Revendications

1. Appareil de mélange de compositions de matières et de détection en continu de l'homogénéité et de la concentration constitutive desdites compositions de matières, comprenant:
un moyen de mélange (20) pour mélanger lesdites compositions de matières, ledit moyen de mélange comprenant un conteneur (10) défini par une paroi, ladite paroi définissant une pluralité de sites de détection qui sont séparés spatialement les uns des autres et situés dans des régions distinctes dudit conteneur ; et
un moyen spectroscopique (30) de détection en ligne de l'homogénéité et de concentration constitutive desdites compositions de matières, ledit moyen spectroscopique comprenant
une pluralité de moyens de détection spectroscopiques (32) disposés sur ledit moyen de mélange pour fournir de la lumière auxdites compositions de matières et détecter la lumière émise desdites compositions de matières, chacun des multiples moyens de détection spectroscopiques étant placé sur un site de détection différent de celui des autres moyens de détection spectroscopiques,
un premier moyen de commande (34) pour fournir ladite lumière à ladite multiplicité de moyens de détection spectroscopiques et analyser ladite lumière émise de ladite multiplicité de moyens de détection spectroscopiques, ledit premier moyen de commande comprenant un moyen de source de lumière (34a) pour fournir une longueur d'ondes prédéterminée de ladite lumière à ladite multiplicité de moyens de détection spectroscopiques et un moyen d'analyse (34b) pour analyser ladite lumière émise par ladite multiplicité de moyens de détection spectroscopiques, et
un second moyen de commande (36) en communication avec ledit premier moyen de commande et ladite multiplicité de moyens de détection spectroscopiques pour commander la transmission de ladite lumière dudit moyen de source de lumière à ladite multiplicité de moyens de détection spectroscopiques et ladite lumière émise de ladite multiplicité de moyens de détection spectroscopiques audit moyen d'analyse, ledit second moyen de commande comprenant un moyen de commutation pour connecter un moyen respectif de ladite multiplicité de moyens de détection spectroscopiques audit premier moyen de commande.

2. Appareil selon la revendication 1, dans lequel ledit moyen spectroscopique comprend un premier moyen de conduction (40) pour conduire ladite lumière dudit moyen de source de lumière audit second moyen de commande et conduire ladite lumière émise dudit second moyen de commande audit moyen d'analyse et au moins un deuxième moyen de conduction (42) pour conduire la lumière dudit second moyen de commande à un moyen respectif de ladite multiplicité de moyens de détection spectroscopiques et conduire ladite lumière émise du moyen respectif de ladite multiplicité de moyens de détection spectroscopiques audit second moyen de commande.

3. Appareil selon la revendication 1, pour détecter en continu les caractéristiques spectroscopiques desdites compositions de matière, dans lequel ledit moyen de mélange est adapté de façon à tourner autour d'un axe de rotation (RA), ledit moyen de mélange comprenant un premier et un deuxième moyens rotatifs à proximité dudit axe de rotation pour faciliter la rotation dudit moyen de mélange, ledit premier moyen de rotation étant en communication avec un premier support et ledit deuxième moyen de rotation étant en communication avec un second support, au moins l'un desdits premier et deuxième moyens de rotation comprenant un premier élément (50) adapté de façon à tourner avec ledit moyen de mélange et un deuxième élément (52) adapté pour rester relativement fixe en relation avec ledit premier élément pendant ladite rotation dudit premier élément, ledit second élément ayant un orifice de communication (54) au travers de celui-ci, dans lequel ledit second moyen de commande comprend en outre un premier moyen de conduction (40) pour conduire ladite lumière dudit moyen de source de lumière audit second moyen de commande et conduire ladite lumière émise dudit second moyen de commande audit moyen d'analyse et une pluralité de deuxièmes moyens de conduction (42) pour conduire ladite lumière dudit second moyen de commande à la multiplicité de moyens de détection spectroscopiques et conduire ladite lumière émise de ladite multiplicité de moyens de détection spectroscopiques audit second moyen de commande, ledit premier moyen de conduction étant disposé de façon amovible dans ledit orifice de communication.

4. Appareil selon la revendication 3, dans lequel chacun des multiples deuxièmes moyens de conduction présente une première extrémité adaptée de façon à être reliée de manière amovible à un moyen respectif parmi ladite multiplicité de moyens de détection spectroscopiques et une deuxième extrémité adaptée de façon à être reliée de manière amovible audit second moyen de commande.

5. Appareil selon la revendication 4, dans lequel ledit second moyen de commande comprend une pluralité de deuxièmes entrées de moyens de conduction (38), chacune desdites multiples deuxièmes entrées de moyens de conduction étant adaptée de façon à recevoir ladite deuxième extrémité d'un moyen respectif dudit deuxième moyen de conduction.

6. Appareil selon la revendication 5, dans lequel ledit premier moyen de commande comprend en outre : (a) un moyen de détermination de l'emplacement de chacun des multiples moyens de détection spectroscopiques sur ladite paroi du conteneur ; (b) un moyen de commande de la conduction de ladite lumière depuis ledit moyen de source de lumière jusqu'à un moyen respectif parmi lesdits multiples moyens de détection spectroscopiques ; et (c) un moyen de sélection d'un moyen de détection respectif parmi lesdits multiples moyens de détection spectroscopiques pour conduire ladite lumière émise dudit moyen de détection parmi, la pluralité de moyens de détection spectroscopiques audit moyen d'analyse.

7. Appareil selon la revendication 6, dans lequel ledit moyen spectroscopique comprend un pas de contrôle (44) en communication avec lesdits premier et deuxième moyens de commande adaptés pour transmettre au moins un premier signal dudit second moyen de commande audit premier moyen de commande indiquant l'emplacement d'un moyen de détection respectif parmi lesdits multiples moyens de détection spectroscopiques qui est en communication avec ledit premier moyen de commande pendant la rotation dudit conteneur.

8. Appareil selon la revendication 7, dans lequel ledit pas de contrôle est disposé de façon amovible dans ledit orifice de communication.

9. Appareil selon la revendication 1 ou 3, dans lequel ledit moyen de mélange comprend un bac de mélange (10).

10. Appareil selon la revendication 1 ou 3, dans lequel ledit moyen de mélange comprend un mélangeur choisi dans le groupe comprenant un mélangeur en V, un mélangeur central et un mélangeur à ruban.

11. Appareil selon la revendication 1 ou 3, dans lequel chacun desdits multiples moyens de détection comprend une sonde de réflexion.

12. Appareil selon la revendication 1 ou 3, dans lequel chacun desdits multiples moyens de détection spectroscopiques comprend une sonde de transflexion.

13. Appareil selon la revendication 1 ou 3, dans lequel chacun desdits multiples moyens de détection spectroscopiques comprend un spectrophotomètre choisi dans le groupe comprenant un spectrophotomètre dans l'infrarouge proche, un spectrophotomètre dans l'ultraviolet, un spectrophotomètre dans l'infrarouge moyen, un spectrophotomètre dans la lumière visible, un spectrophotomètre du spectre fluorescent et un spectrophotomètre du spectre Raman.

14. Appareil selon la revendication 1, dans lequel ladite multiplicité de moyens de détection spectroscopiques comprend au moins dix moyens de détection spectroscopiques.

15. Procédé de mélange de compositions de matières et de détection en continu de l'homogénéité et de la concentration constitutive desdites compositions de matières par la détection en continu de caractéristiques spectroscopiques desdites compositions de matières, comprenant les étapes suivantes : placer lesdites compositions de matières dans un moyen de mélange (20) qui comprend un conteneur (10) défini par une paroi qui définit plusieurs emplacements de détection qui sont séparés spatialement les uns des autres et situés dans des régions distinctes dudit conteneur ; mélanger lesdites compositions de matière ; détecter en continu l'homogénéité et la concentration constitutive desdites compositions de matière en détectant en continu les caractéristiques spectroscopiques desdites compositions de matières avec des moyens spectroscopiques (30), lesdits moyens spectroscopiques comprenant
une pluralité de moyens de détection spectroscopiques (32), chacun étant disposé sur ledit moyen de mélange à un emplacement de détection différent de celui de l'autre moyen de détection spectroscopique, pour fournir de la lumière auxdites compositions de matières et détecter la lumière émise desdites compositions de matières,
un premier moyen de commande (34) pour fournir ladite lumière à ladite multiplicité de moyens de détection spectroscopiques et analyser ladite lumière émise de ladite multiplicité de moyens de détection spectroscopiques, et
un second moyen de commande (36) en communication avec ledit premier moyen de commande et ladite multiplicité de moyens de détection spectroscopiques pour contrôler la transmission de ladite lumière dudit premier moyen de commande à ladite multiplicité de moyens de détection spectroscopiques et ladite lumière de ladite pluralité de moyens de détection spectroscopiques audit premier moyen de commande, ledit deuxième moyen de commande comprenant un moyen de commutation pour relier un moyen respectif parmi lesdits multiples moyens de détection spectroscopiques audit premier moyen de commande.
